# EUROPÄISCHE PATENTSCHRIFT

(11) **EP 0 417 583 B1**
(45) Veröffentlichungstag und Bekanntmachung des Hinweises auf die Patenterteilung: **14.05.1997**
(21) Anmeldenummer: 90116823.7
(22) Anmeldetag: 01.09.1990
(51) Int. Cl.: C04B 28/26, C04B 18/08, C04B 38/02

(54) **Anorganische Formmasse**
Inorganic shaped body
Masse minerale façonnée

(30) Priorität: 12.09.1989 DE 3930502
(43) Veröffentlichungstag der Anmeldung: 20.03.1991
(73) Patentinhaber: HT TROPLAST AG, D-53839 Troisdorf (DE)
(72) Erfinder: Engels, Hans Werner, D-5210 Troisdorf (DE); Neuschäffer, Karlheinz, Dr., D-5653 Leichlingen (DE)

(56) Entgegenhaltungen:
- EP-A- 0 364 668
- DE-A- 2 043 238
- DE-A- 3 512 588
- FR-A- 2 093 334
- GB-A- 2 055 090
- US-A- 4 328 034
- CHEMICAL ABSTRACTS, Band 106, Nr. 24, 15. Juni 1987, Seite 294, Zusammenfassung Nr. 200904s, Columbus, Ohio, US;
- WORLD PATENTS INDEX, Woche 29, Accession Nr. 80-51321c, Derwent Publications Ltd, London, GB;

## Beschreibung

Die Erfindung betrifft eine Formmasse - bzw. die aus mehreren Teilen bestehende Zusammenstellung der Komponenten - zur Herstellung eines Formkörpers
- mit einer anorganischen, steinbildenden Komponente und
- mit einer Alkalisilikatlösung mit 1,2 - 2,5 Mol SiO₂ je Mol K₂O und/oder Na₂O als Härter,
sowie einen daraus hergestellten Formkörper.

Es sind bereits einige Formmassen dieser Art bekannt, die eine aktive, steinbildende Komponente enthalten, die in wäßrigem Reaktionsmedium mit einer Alkalisilikatlösung bei relativ geringen Temperaturen in exothermer Reaktion aushärtet. Im Gegensatz zu Formmassen auf Zementbasis wird dabei das Wasser nicht chemisch gebunden, sondern es verdampft nach der Reaktion durch die Wärme der exothermen Reaktion bzw. kann durch Erhitzen des Formkörpers ausgetrieben werden.

Aus der EP-B1-0 148 280 (= US-A-4,533,393) ist als aktive, steinbildende Komponente ein Oxidgemisch mit Gehalten von amorphem SiO₂ und Aluminiumoxid, das als Ofenfilterstaub bei der Korund- oder Mullitherstellung anfällt, sowie ungelöstes SiO₂ aus einer amorphen, dispers-pulverförmigen Kieselsäure bekannt.

Die EP-A2-0 199 941 (= US-A-4,681,631) beschreibt die Verwendung von glasartig amorpher Elektrofilterasche aus Hochtemperatur-Steinkohlekraftwerken sowie von kalziniertem, fein gemahlenem Bauxit als reaktionsfähigem Feststoff.

Ferner sind aus CA, 106, Nr. 24, 1987, Seite 294 Formmassen mit Härter auf Basis von Wasserglas bekannt, die als steinbildende Komponenten ein Abfallprodukt aus der Aluminiumoxid-Produktion als Al₂O₃-Komponente, Flugasche aus der Braunkohle-Produktion und Füllstoff aufweisen.

Die bisher bekannten gattungsgemäßen Formmassen weisen je nach ihrer Zusammensetzung sehr unterschiedliche Aktivitäten auf, die zu entsprechend unterschiedlichen Reaktionszeiten fuhren. Die Reaktionszeit ist dabei stark temperaturabhängig, so daß die Formmassen je nach der erzeugten Reaktionswärme mehr oder weniger schnell aushärten. Es besteht dabei insbesondere ein Bedürfnis nach besonders schnell reagierenden aktiven steinbildenden Komponenten, die ggf. in Abmischungen mit anderen träger reagierenden steinbildenden Feststoffen zu überlegenen Formmassen führen.

Aufgabe der Erfindung ist es daher, eine gattungsgemäße Formmasse - bzw. eine Zusammenstellung der Komponenten - zur Verfügung zu stellen, die in kürzerer Zeit aushärtet als die bekannten Formmassen.

Die Erfindung löst diese Aufgabe durch den Einsatz von feinteiligem Elektrofilterstaub aus Braunkohlekraftwerken in Kombination mit der gemäß Anspruch 1 gegebenen Auswahl reaktiver Feststoffe.

Unter "Zusammenstellung" im Sinne der Erfindung wird die Summe der noch nicht (vollständig) vermischten Komponenten der Formmasse verstanden.

Als Elektrofilterstaub wird der in Filteranlagen in modernen Braunkohlekraftwerken hinter der Feuerung als feinteiliger Staub abgeschiedene Anteil der festen Verbrennungsprodukte verstanden.

Während bei Steinkohle-Kraftwerken die Filterstäube erst bei Verbrennungstemperaturen oberhalb von ca. 1600 °C als reaktive, steinbildende Komponenten verwendet werden können, sind die erfindungsgemäßen Braunkohlekraftwerks-Filteraschen trotz der sehr viel geringeren Verbrennungstemperaturen mit Alkalisilikatlösungen reaktiv.

Zum Vergleich der Reaktivität verschiedener steinbildender Feststoffe wird eine definierte Menge der zu prüfenden steinbildenden Komponente mit einem Füllstoff und einer Alkalisilikatlösung zu einer Suspension angemischt und in eine Form gefüllt, wobei Art und Menge des Füllstoffs und der Alkalisilikatlösung identisch bleiben.

Anschließend wird die zur Erreichung einer definierten Härte (Eindringtiefe eines Prüfkörpers) notwendige Härtungszeit gemessen. Überraschend hat sich herausgestellt, daß Braunkohlekraftwerks-Filterstaub die höchste Reaktivität (kürzeste Aushärtezeit) aller bislang bekannten steinbildenden Komponenten aufweist.

Die hohe Reaktivität und die sehr hohe Härtungsgeschwindigkeit der erfindungsgemäßen Formmasse ist überraschend: feinkörnige Stäube auf mineralischer Basis reagieren nämlich, bis auf die wenigen genannten Ausnahmen, nicht mit Alkalisilikatlösungen. Der Elektrofilterstaub aus Braunkohlekraftwerken unterscheidet sich zudem in seiner Zusammensetzung wesentlich von den wenigen bisher bekannten reaktionsfähigen Feststoffen bzgl. des formalen analytischen Oxidgehalts. Der auf Oxide berechnete Stoffgehalt liegt bei dem erfindungsgemäßen Filterstaub bei 25 bis 35 Gew.-% CaO, 8 bis 12 Gew.-% MgO, 3 bis 6 Gew.-% Al₂O₃, 20 bis 25 Gew.-% SiO₂, 8 bis 10 Gew.-% Eisenoxide und Sulfat, offenbar als wasserfreies CaSO₄. Diese Berechnung als Oxide sagt dabei nichts über die tatsächlich vorhandenen Verbindungen, welche sich bei amorphen Stäuben auch mit modernsten Mitteln nicht feststellen lassen.

Der bevorzugte Anteil des an der Reaktion beteiligten Elektrofilterstaubs beträgt 0,4 bis 3,0 Gew.-Tle. je Gew.-Teil Alkalisilikatlösung.

Es ist möglich, den Elektrofilterstaub aus Braunkohlekraftwerken teilweise, besonders zu einem Anteil bis zu 60 Gew.-%, durch einen der genannten und bereits bekannten reaktionsfähigen Feststoffe zu ersetzen.

Es ist jedoch auch möglich, den Braunkohlekraftwerks-Filterstaub in nur geringen Anteilen den bekannten steinbildenden Komponenten beizumischen, um die Reaktivität der damit hergestellten Formmassen zu erhöhen und die für die Aushärtung benötigte Zeit zu verringern.

Als steinbildende Komponente wird ein Gemisch aus feinteiligem Elektrofilterstaub aus Braunkohlekraftwerken und einem oder mehreren reaktiven Feststoffen aus der Gruppe
I feinteiliges Oxidgemisch mit Gehalten von amorphem Siliziumdioxid und Aluminium, gewonnen als Filterstaub aus der Korund- oder Mullitherstellullung,
II glasartige, amorphe Elektrofilterasche aus Hochtemperatur-Steinkohlekraftwerken,
III gemahlener kalzinierter Bauxit,
IV ungelöstes, amorphes SiO₂, insbesondere aus einer amorphen, dispers-pulverförmigen, entwässerten oder wasserhaltigen Kieselsäure oder aus Hochtemperaturprozessen (Silica Fume),
V Metakaolin
eingesetzt, wobei der Anteil an Braunkohlekraftwerks-Filterstaub bevorzugt 5-20 Gew.-% beträgt.

In der Alkalisilikatlösung sind bevorzugt 1,3 bis 2,2 Mol SiO₂ je Mol K₂O bzw. Na₂O enthalten. In Alkalisilikatlösungen ist K₂O gegenüber Na₂O bevorzugt. Die Alkalisilikatlösungen sollen Alkali im Überschuß enthalten ("alkalische Alkalisilikatlösung"). Sehr bevorzugt werden solche Alkalisilikatlösungen durch Auflösen von amorpher, dispers-pulverförmiger, wasserhaltiger Kieselsäure, der sogenannten gefällten Kieselsäure, erhalten. Dabei wird bevorzugt eine Lösung der Alkalihydroxide oder festes Alkalihydroxid unter Zusatz von Wasser mit der gefällten Kieselsäure zur Reaktion gebracht. Anstelle der gefällten Kieselsäure kann auch amorphes SiO₂ aus Hochtemperaturprozessen (Silica Fume) verwendet werden.

Zur Herstellung der Formmasse werden die Komponenten gemischt. Dann werden geeignete Formen mit der Formmasse gefüllt, wobei im Regelfall nach sehr kurzer Zeit eine Verfestigung eintritt, die eine Entformung erlaubt. Die Aushärtung der Formmasse erfolgt in exothermer Reaktion. Zum Starten der Härtungsreaktion kann die Formmasse kurzzeitig erwärmt werden, wobei Temperaturen zwischen 20 und 100 °C bevorzugt und überraschend ausreichend sind. Die Härtungszeit ist vergleichsweise kurz und liegt zwischen 20 und 60 Minuten. Eine anschließende Temperaturbehandlung z.B. bis 500 °C ist möglich.

Die Alkalisilikatlösungen haben im allgemeinen einen Wassergehalt von 28 bis 55 Gew.-%, der bei den nicht bevorzugten Natron-Wasserglaslösungen auch bis zu 60 Gew.% sein kann, wobei die wasserärmeren Lösungen bevorzugt sind. In den Formmassen kann der Wassergehalt vor der Härtung 20 bis 65 Gew.-%, bezogen auf die aktiven steinbildenden Bestandteile und ohne Berücksichtigung der Füllstoffe, betragen, wobei Wassergehalte von 26 bis 58 Gew.-% bevorzugt sind.

Füllstoffe können in Mengen bis zu beispielsweise 1.000 g, vorzugsweise bis zu 400 g und insbesondere 100 g je 100 g des aktiv härtenden Feststoffs in der Formmasse enthalten sein.

Die Art der Füllstoffe ist sehr vielfältig, wobei einfach zugängliche, anorganische Stoffe in gemahlener oder verteilter Form bevorzugt werden, beispielsweise Gesteinsmehle, Basalte, Tone, Feldspäte, Glimmer-Mehl, Glas-Mehl, Quarzsand oder Quarz-Mehl, Bauxit-Mehl, Tonerdehydrat und Abfälle der Tonerde-, Bauxit- oder Korund-Industrie, Aschen, Schlacken sowie mineralische Fasermaterialien. Weiterhin können organische Fasermaterialien, beispielsweise Cellulose-Fasern oder synthetische Fasern, als verstärkende Füllstoffe anwesend sein. Als Füllstoff ist von besonderem Wert Flugasche aus Steinkohle-Kraftwerken, die Kesseltemperaturen unter 1.600 °C haben. Solche Flugasche ist nicht reaktionsfähig oder steinbildend, jedoch wegen der Feinteiligkeit gut einmischbar.

Eine Einfärbung, insbesondere durch Pigmentfarben, ist möglich.

Bei ungefüllten Formkörpern ist durch die rasche Härtung eine Rißbildung möglich. Sie kann vermieden werden durch Faserzusätze, Zusätze von z.B. Glimmer als Füllstoff sowie ggf. durch hohe Füllstoffmengen oder Anteile von solchen reaktionsfähigen Feststoffen, die weniger rasch erhärten. Auch die Herstellung von Formkörpern großer Dimensionen und großflächiger flacher Formkörper, die beispielsweise als Platten für die Verkleidung von Wänden o. dgl. dienen, ist dann möglich.

Der besondere Vorteil der erfindungsgemäßen Formmassen bzw. Formkörper liegt darin, daß Formkörper erhalten werden, die vielfach keramische Formkörper ersetzen können, jedoch auf energiesparende Weise hergestellt werden, da ein Brennvorgang wie bei keramischen Materialien überflüssig ist.

Schaumkörper können mit dieser Elektrofilterasche aus Braunkohlekraftwerken durch Zugabe eines sich in der alkalischen Silikatlösung unter Gasbildung zersetzenden Treibmittels wie z.B. Wasserstoffperoxid oder dieses abgebende Verbindungen, z.B. Na-Persulfat, Na-Percarbonat, Na-Perborat oder Metallpulver, wie Aluminium bzw. Silizium, ohne Wärmezufuhr von außen in kurzer Schäum- und Härtezeit hergestellt werden, wobei durch die Mengenverhältnisse und die Wahl geeigneter Füllstoffe sowie gegebenenfalls durch Faserzusatz die Eigenschaften variiert werden können. Bei Schaumkörpern ist die sehr kurze Härtungszeit besonders gut erkennbar. Geeignete Schäummittel und ggf. Reaktionsbeschleuniger sind z. B. aus der WO 89/05783 bekannt.

### Beispiele:

Die in der Tabelle genannten Bestandteile werden zu einer gleichmäßigen Suspension verrührt.

Bei den Beispielen 1 und 2 erfolgt dann die Zugabe der Wasserstoffperoxidlösung als Treibmittel und sofortige Einfüllung in die Form. Bei den Schaumkörpern ist die Härtezeit etwa gleich der Schäumzeit.

Aus der Tabelle ergibt sich, daß die für die Aushärtung erforderliche Zeit nahezu unabhängig von der Umgebungstemperatur ist, soweit erfindungsgemäß zumindest anteilig Braunkohlekraftwerks-Filterstaub eingesetzt wird.

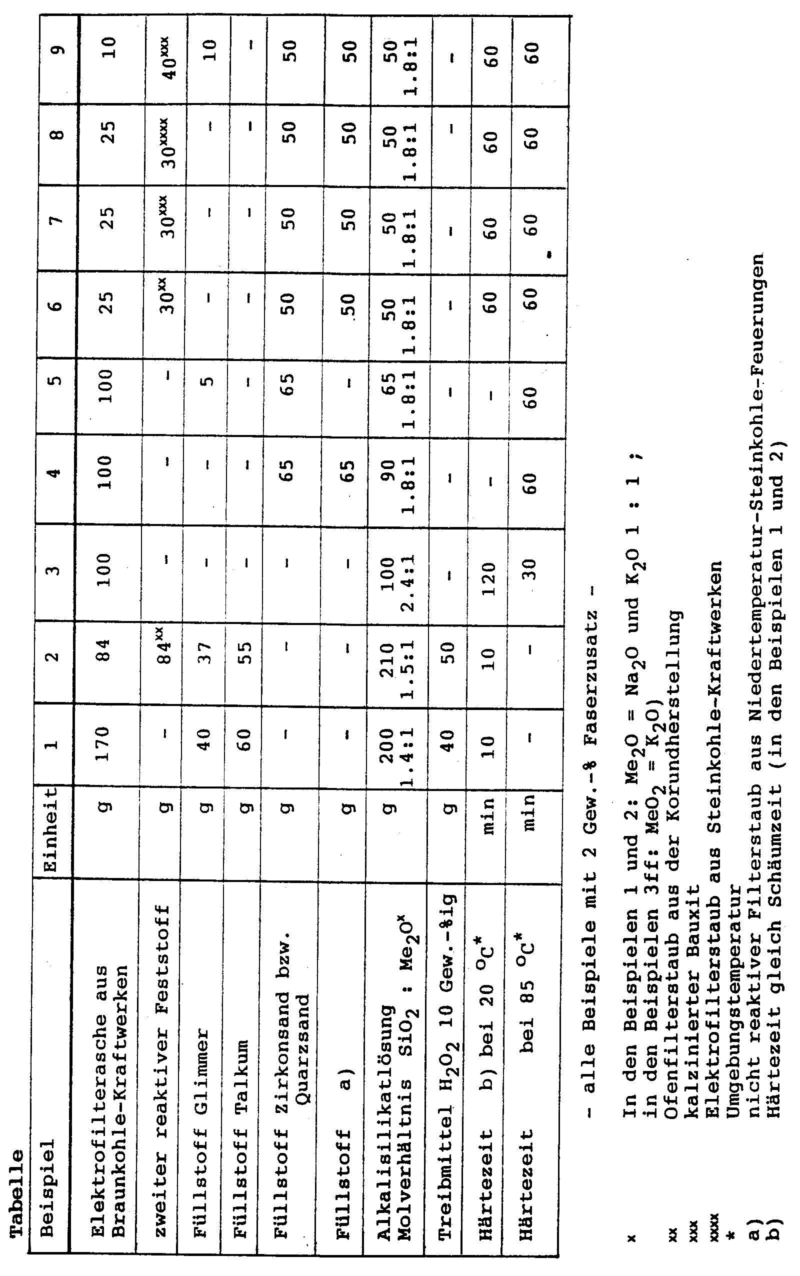

## Patentansprüche

1. Formmasse oder aus mehreren Teilen bestehende Zusammenstellung der Komponenten zur Herstellung eines Formkörpers,
- mit einer anorganischen, steinbildenden Komponente,
- mit einer Alkalisilikatlösung mit 1,2 - 2,5 Mol SiO₂ je Mol K₂O und/oder Na₂O als Härter, wobei
als steinbildende Komponente ein Gemisch aus feinteiligem Elektrofilterstaub aus Braunkohlekraftwerken und einem oder mehreren der reaktiven Feststoffen aus der Gruppe
I feinteiliges Oxidgemisch mit Gehalten von amorphem Siliziumdioxid und Aluminiumoxid, gewonnen als Filterstaub aus der Korund- oder Mullitherstellung,
II glasartige, amorphe Elektrofilterasche aus Hochtemperatur-Steinkohlekraftwerken,
III gemahlener kalzinierter Bauxit,
IV ungelöstes, amorphes SiO₂, insbesondere aus einer amorphen, dispers-pulverförmigen, entwässerten oder wasserhaltigen Kieselsäure oder aus Hochtemperaturprozessen (Silica Fume),
V Metakaolin,
eingesetzt wird

2. Formmasse oder Zusammenstellung nach Anspruch 1, *dadurch gekennzeichnet*, daß der feinteilige Elektrofilterstaub aus Braunkohlekraftwerken einen Gehalt an Ca, Mg, Al, Si und Fe - berechnet als Gehalt der Metalloxide - von
- 25-35 Gew.-Teilen CaO,
- 8-12 Gew.-Teilen MgO,
- 3- 6 Gew.-Teilen Al₂O₃,
- 20-25 Gew.-Teilen SiO₂,
- 8-10 Gew.-Teilen Eisenoxide,
aufweist.

3. Formmasse oder Zusammenstellung nach einem der Ansprüche 1 oder 2, *gekennzeichnet durch* einen Füllstoffgehalt von 5 bis 100 Gew.-Tle. je 100 Gew. -Teile der steinbildenden Komponente.

4. Formmasse oder Zusammenstellung nach Anspruch 2, *dadurch gekennzeichnet*, daß 0,4 - 3,0 Gew.-Tle. der steinbildenden Komponente je Gew.-Teil der Alkalisilikatlösung enthalten sind.

5. Formkörper, hergestellt durch Gießen einer Formmasse nach einem der Ansprüche 1 bis 4 in eine Form und Aushärten bei einer Umgebungstemperatur von 20° - 100 °C.

## Claims

1. Moulding composition or combination of the components that consists of a plurality of parts, for preparing a moulded body and having
- an inorganic, rock-forming component,
- an alkali silicate solution with 1.2 - 2.5 mole SiO₂ per mole of K₂O and/or Na₂O as a hardener,
- with a mixture of fine-particle electrostatic filter dust from lignite power stations and one or more of the reactive solids from the group
I finely divided oxide mixture with contents of amorphous silicon dioxide and aluminium oxide, obtained as filter dust from the preparation of corundum or mullite,
II glass-like, amorphous electrostatic filter ash from high-temperature hard coal power stations,
III ground calcined bauxite,
IV undissolved, amorphous SiO₂, in particular from an amorphous, disperse-powdered, dehydrated or water-containing silicic acid, or from high-temperature processes (silica fume),
V metakaolin,
being used as a rock-forming component.

2. Moulding composition or combination according to claim 1, characterised in that the fine-particle electrostatic filter dust from lignite power stations has a content of Ca, Mg, Al, Si and Fe - calculated as content of the metal oxide - of
- 25 - 35 parts by weight CaO,
- 8 - 12 parts by weight MgO,
- 3 - 6 parts by weight Al₂O₃,
- 20 - 25 parts by weight SiO₂,
- 8 - 10 parts by weight iron oxide.

3. Moulding composition or combination according to one of the claims 1 or 2, characterised by a filler content of 5 to 100 parts by weight per 100 parts by weight of the rock-forming component.

4. Moulding composition or combination according to claim 2, characterised in that there are 0.4 - 3.0 parts by weight of the rock-forming component per part by weight of the alkali silicate solution.

5. Moulded body, prepared by casting a moulding composition according to one of the claims 1 to 4 into a mould and hardening it at an ambient temperature of 20° to 100°C.

## Revendications

1. Matière à mouler, ou composition en plusieurs parties, de composants pour fabrication de corps moulés, comprenant
- un composant inorganique pétrogène,
- et comme durcisseur, une solution de silicates de métaux alcalins contenant de 1,2 à 2,5 moles de SiO₂ par mole de K₂O et/ou Na₂O,
le composant pétrogène utilisé étant un mélange de fines poussières d'électrofiltre, provenant de centrales thermiques fonctionnant au lignite, et d'une ou de plusieurs des matières solides réactives choisies dans l'ensemble que constituent
I) un mélange d'oxydes en fines particules, contenant une certaine quantité de silice amorphe et d'alumine, qui est de la poussière de filtre récupérée lors de la préparation de corindon ou de mullite,
II) des cendres d'électrofiltre vitreuses et amorphes, provenant de centrales thermiques fonctionnant à la houille à haute température,
III) de la bauxite calcinée et broyée,
IV) de la silice amorphe non dissoute provenant en particulier d'un acide silicique amorphe, à l'état de poudre en dispersion, déshydraté ou hydraté, ou bien d'un procédé se déroulant à haute température (silice de pyrohydrolyse), et
V) du métakaolin.

2. Matière à mouler ou composition conforme à la revendication 1, caractérisée en ce que les fines poussières d'électrofiltre provenant de centrales thermiques fonctionnant au lignite contiennent du calcium, du magnésium, de l'aluminium, du silicium et du fer en les quantités suivantes, calculées en oxydes de ces métaux :
- de 25 à 35 parties en poids de CaO,
- de 8 à 12 parties en poids de MgO,
- de 3 à 6 parties en poids d'Al₂O₃,
- de 20 à 25 parties en poids de SiO₂, et
- de 8 à 10 parties en poids d'oxydes de fer.

3. Matière à mouler ou composition conforme à l'une des revendications 1 et 2, caractérisée en ce qu'elle contient de 5 à 100 parties en poids d'une charge pour 100 parties en poids du composant pétrogène.

4. Matière à mouler ou composition conforme à la revendication 2, caractérisée en ce qu'elle contient de 0,4 à 3,0 parties en poids du composant pétrogène pour 1 partie en poids de solution de silicates de métaux alcalins

5. Corps moulé qu'on a fabriqué en versant dans un moule une matière à mouler conforme à l'une des revendications 1 à 4 et en l'y laissant durcir à une température ambiante située entre 20°C et 100°C.
